# EUROPÄISCHE PATENTANMELDUNG

(11) **EP 3 232 111 A1**
(43) Veröffentlichungstag der Anmeldung: **18.10.2017**
(21) Anmeldenummer: 16000850.4
(22) Anmeldetag: 14.04.2016
(51) Int. Cl.: F17C 1/00

(54) **BEHÄLTER FÜR EIN TIEFKALTES FLÜSSIGGAS**

(71) Anmelder: Linde Aktiengesellschaft, 80331 München (DE)
(72) Erfinder: Guckel, Martin, 83342 Tacherting (DE); Müller, Eva, 83308 Trostberg (DE); Bichlmeier, Jürgen, 83342 Tacherting (DE)
(74) Vertreter: Meilinger, Claudia Sabine

(57) **Zusammenfassung**

Ein Behälter (1) für ein tiefkaltes Flüssiggas (G), mit einem Innenbehälter (5) zum Aufnehmen des tiefkalten Flüssiggases (G), einem Außenbehälter (7), innerhalb dem der Innenbehälter (5) aufgenommen ist, einem zwischen dem Innenbehälter (5) und dem Außenbehälter (7) vorgesehenen Isolierraum (9) zum thermischen Isolieren des Innenbehälters (5) und einer Förderpumpe (10) zum Fördern des tiefkalten Flüssiggases (G), wobei die Förderpumpe (10) in dem Isolierraum (9) angeordnet ist und wobei eine Mittelachse (M₁₀) der Förderpumpe (10) schräg zu einer Schwerkraftrichtung (g) angeordnet ist.

## Beschreibung

Die vorliegende Erfindung betrifft einen Behälter für ein tiefkaltes Flüssiggas.

Zum Lagern von tiefkalten Flüssiggasen oder kryogenen Gasen, wie beispielsweise Flüssigerdgas oder Wasserstoff, sind zylinderförmige Behälter mit einem Innenbehälter und einem Außenbehälter bekannt, zwischen denen ein Isolierraum zum Isolieren des Innenbehälters angeordnet ist. Zum Fördern des tiefkalten Flüssiggases, beispielsweise zum Betanken eines Fahrzeugs, kann außerhalb des Behälters eine Förderpumpe angeordnet sein, die über thermisch isolierte Rohrleitungen in Fluidverbindung mit dem Innentank ist.

Die CN 104235594 A beschreibt einen derartige Behälter mit einem Innenbehälter, einem Außenbehälter, innerhalb dem der Innenbehälter aufgenommen ist, und einem zwischen dem Innenbehälter und dem Außenbehälter vorgesehenen Isolierraum. In dem Isolierraum ist eine Förderpumpe angeordnet, deren Mittelachse vertikal oder in Schwerkraftrichtung orientiert ist.

Vor diesem Hintergrund besteht die Aufgabe der vorliegenden Erfindung darin, einen verbesserten Behälter für ein tiefkaltes Flüssiggas zur Verfügung zu stellen.

Demgemäß wird ein Behälter für ein tiefkaltes Flüssiggas mit einem Innenbehälter, zum Aufnehmen des tiefkalten Flüssiggases, einem Außenbehälter, innerhalb dem der Innenbehälter aufgenommen ist, einem zwischen dem Innenbehälter und dem Außenbehälter vorgesehenen Isolierraum zum thermischen Isolieren des Innenbehälters und einer Förderpumpe zum Fördern des tiefkalten Flüssiggases vorgeschlagen. Die Förderpumpe ist in dem Isolierraum angeordnet, wobei eine Mittelachse der Förderpumpe schräg zu einer Schwerkraftrichtung angeordnet ist.

Vorzugsweise ist der Innenbehälter vollständig innerhalb des Außenbehälters angeordnet und die Förderpumpe ist vorzugsweise vollständig innerhalb des Isolierraums angeordnet. Dass die Mittelachse der Förderpumpe schräg zu der Schwerkraftrichtung angeordnet ist, heißt, dass die Förderpumpe nicht wie bei bekannten Behältern vertikal, sondern schräg zu einer Vertikalen positioniert ist. Die Förderpumpe ist vorzugsweise eine Kreiselpumpe. Im Betrieb der Förderpumpe ist diese vollständig mit dem zu fördernden tiefkalten Flüssiggas bedeckt. Der Begriff "Gas" wird im Folgenden ohne Ansehen des Aggregatzustands verwendet und steht somit als Dachbegriff für ein Fluid im gasförmigen und im flüssigen Aggregatszustand, im Folgenden als Flüssiggas und als gasförmiges Gas bezeichnet. Dementsprechend hat der mit Gas gefüllte Innenbehälter eine Flüssigkeitszone und darüber eine Gaszone. Dem Behälter kann eine Entnahmevorrichtung zum Entnehmen des tiefkalten Flüssiggases aus dem Behälter zugeordnet sein. Die Entnahmevorrichtung kann eine Zapfvorrichtung, beispielsweise zum Betanken eines Fahrzeugs, sein. Die Entnahmevorrichtung kann den Behälter umfassen.

Dadurch, dass die Förderpumpe in dem Isolierraum angeordnet ist, kann auf eine aufwändige und kostenintensive Verrohrung der Förderpumpe verzichtet werden. Dadurch, dass die Mittelache der Förderpumpe schräg zu der Schwerkraftrichtung angeordnet ist, kann die Förderpumpe beim Montieren derselben in oder an dem Behälter schräg in den Außenbehälter eingesetzt werden. Da der Innenbehälter vorzugsweise einen gewölbten Deckel aufweist, kann die Förderpumpe bei der Montage schräg an dem gewölbten Deckel vorbeigeführt werden. Hierdurch ergibt sich im Vergleich zu einer vertikalen Anordnung der Förderpumpe ein deutlich verkleinerter Bauraum des Außentanks.

Gemäß einer Ausführungsform ist der Innenbehälter schräg in Richtung der Förderpumpe geneigt.

Hierdurch ist sichergestellt, dass auch bei einem niedrigen Flüssigkeitsstand in dem Innenbehälter dieser vollständig entleert wird.

Gemäß einer weiteren Ausführungsform sind der Innenbehälter und der Außenbehälter jeweils zylinderförmig um eine Mittelachse aufgebaut, wobei die Mittelachse der Förderpumpe schräg zu der Mittelache des Außenbehälters angeordnet ist.

Die jeweilige Mittelachse des Innenbehälters und des Außenbehälters sind vorzugsweise senkrecht zu der Schwerkraftrichtung beziehungsweise horizontal angeordnet. Die Mittelachse der Förderpumpe ist vorzugsweise in einem vorbestimmten Winkel relativ zu der Mittelachse des Außenbehälters angeordnet. Der vorbestimmte Winkel kann bevorzugt 50 bis 80°, bevorzugt 55 bis 75°, weiter bevorzugt 60 bis 70°, weiter bevorzugt 65°, betragen. Insbesondere kann die Mittelachse der Förderpumpe auch in einem vorbestimmten Winkel schräg zu der Schwerkraftrichtung geneigt sein. Der vorbestimmte Winkel zu der Schwerkraftrichtung kann bevorzugt 10 bis 40°, weiter bevorzugt 15 bis 35°, weiter bevorzugt 20 bis 30°, weiter bevorzugt 25°, betragen.

Gemäß einer weiteren Ausführungsform ist die Mittelachse des Innenbehälters schräg zu der Mittelachse des Außenbehälters angeordnet.

Vorzugsweise kann die Mittelachse des Innenbehälters in einem vorbestimmten Winkel relativ zu der Mittelachse des Außenbehälters angeordnet sein. Der vorbestimmte Winkel kann bevorzugt 10 bis 20°, weiter bevorzugt 12 bis 18°, weiter bevorzugt 15°, betragen.

Gemäß einer weiteren Ausführungsform ist die Förderpumpe in einem Pumpengehäuse aufgenommen, das in dem Isolierraum angeordnet ist.

Das Pumpengehäuse ist vorzugsweise zylinderförmig. Das Pumpengehäuse kann rotationssymmetrisch zu einer Symmetrie- oder Mittelachse ausgebildet sein. Die Mittelachse des Pumpengehäuses ist vorzugsweise kollinear zu der Mittelachse der Förderpumpe angeordnet.

Gemäß einer weiteren Ausführungsform ist das Pumpengehäuse nicht in Fluidverbindung mit dem Isolierraum.

Hierdurch kann, falls der Isolierraum evakuiert ist, darauf verzichtet werden auch das Pumpengehäuse zu evakuieren.

Gemäß einer weiteren Ausführungsform ist das Pumpengehäuse im Betrieb der Förderpumpe mit dem tiefkalten Flüssiggas geflutet.

Vorzugsweise wird ein Antriebsmotor der Förderpumpe von dem tiefkalten Flüssiggas gekühlt. Weiterhin können Wälzlager der Förderpumpe mit dem tiefkalten Flüssiggas geschmiert werden. Hierdurch erhöht sich die Lebensdauer der Förderpumpe, und der Wartungsaufwand zum Warten derselben wird reduziert.

Gemäß einer weiteren Ausführungsform ist das Pumpengehäuse über eine Flüssiggaszuführleitung in Fluidverbindung mit dem Innenbehälter.

Über die Flüssiggaszuführleitung wird das Pumpengehäuse im Betrieb der Förderpumpe mit dem tiefkalten Flüssiggas geflutet.

Gemäß einer weiteren Ausführungsform ist das Pumpengehäuse über eine Entlüftungsleitung in Fluidverbindung mit dem Innenbehälter.

Über die Entlüftungsleitung kann sogenanntes Boil-Off-Gas wieder dem Innenbehälter, insbesondere der Gaszone des Innenbehälters, zugeführt werden.

Gemäß einer weiteren Ausführungsform weisen die Flüssiggaszuführleitung und/oder die Entlüftungsleitung jeweils ein Absperrventil auf.

Mit Hilfe des jeweiligen Absperrventils können die Flüssiggaszuführleitung und/oder die Entlüftungsleitung verschlossen werden. Die Flüssiggaszuführleitung und die Entlüftungsleitung sind vorzugsweise vollständig innerhalb des Isolierraums angeordnet. Hierdurch kann auf eine zusätzliche Isolierung der Flüssiggaszuführleitung und der Entlüftungsleitung verzichtet werden.

Gemäß einer weiteren Ausführungsform ist in dem Außenbehälter eine Montageöffnung zum Einbau der Förderpumpe in das Pumpengehäuse vorgesehen.

Die Montageöffnung ist insbesondere so angeordnet, dass beim Einbau der Förderpumpe diese an dem gewölbten Deckel des Innenbehälters vorbei in den Außenbehälter eingeführt wird.

Gemäß einer weiteren Ausführungsform ist eine Montagerichtung der Förderpumpe durch die Montageöffnung hindurch schräg zu der Schwerkraftrichtung orientiert. Vorzugsweise ist die Montagerichtung parallel zu der Mittelachse des Pumpengehäuses orientiert. Die Montagerichtung kann identisch mit der Mittelachse sein.

Gemäß einer weiteren Ausführungsform ist die Montageöffnung mit einem Isolierelement verschlossen.

Das Isolierelement kann beispielsweise ein Styroporblock sein. Das Isolierelement kann an einem Pumpenflansch der Förderpumpe befestigt sein. Mit Hilfe des Pumpenflansches oder eines geeigneten Verschlussdeckels ist die Montageöffnung verschlossen.

Gemäß einer weiteren Ausführungsform weist die Förderpumpe eine Flüssiggasabzapfleitung auf, die aus dem Außenbehälter herausgeführt ist.

Die Flüssiggasabzapfleitung ist vorzugsweise an dem Pumpenflansch befestigt. Mit Hilfe der Flüssiggasabzapfleitung kann beispielsweise ein Fahrzeug betankt werden. Die Flüssiggasabzapfleitung ist vorzugsweise thermisch isoliert.

Gemäß einer weiteren Ausführungsform ist der Isolierraum evakuiert und/oder mit einem Isoliermaterial gefüllt.

Das Isoliermaterial kann beispielsweise Perlit sein. Der Perlit kann als Schüttgut in den Isolierraum eingebracht werden. Hierdurch ist eine kostengünstige und effektive thermische Isolation des Innenbehälters möglich.

Weitere mögliche Implementierungen des Behälters umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Behälters hinzufügen.

Weitere vorteilhafte Ausgestaltungen und Aspekte des Behälters sind Gegenstand der Unteransprüche sowie der im Folgenden beschriebenen Ausführungsbeispiele des Behälters. Im Weiteren wird der Behälter anhand von bevorzugten Ausführungsformen unter Bezugnahme auf die beigelegten Figuren näher erläutert.
Fig. 1 zeigt eine schematische Teilschnittansicht einer Ausführungsform eines Behälters;
Fig. 2 zeigt eine schematische Teilschnittansicht einer Ausführungsform einer Förderpumpe für den Behälter gemäß Fig. 1; und
Fig. 3 zeigt eine schematische Teilschnittansicht einer weiteren Ausführungsform eines Behälters.

In den Figuren sind gleiche oder funktionsgleiche Elemente mit denselben Bezugszeichen versehen worden, sofern nichts anderes angegeben ist.

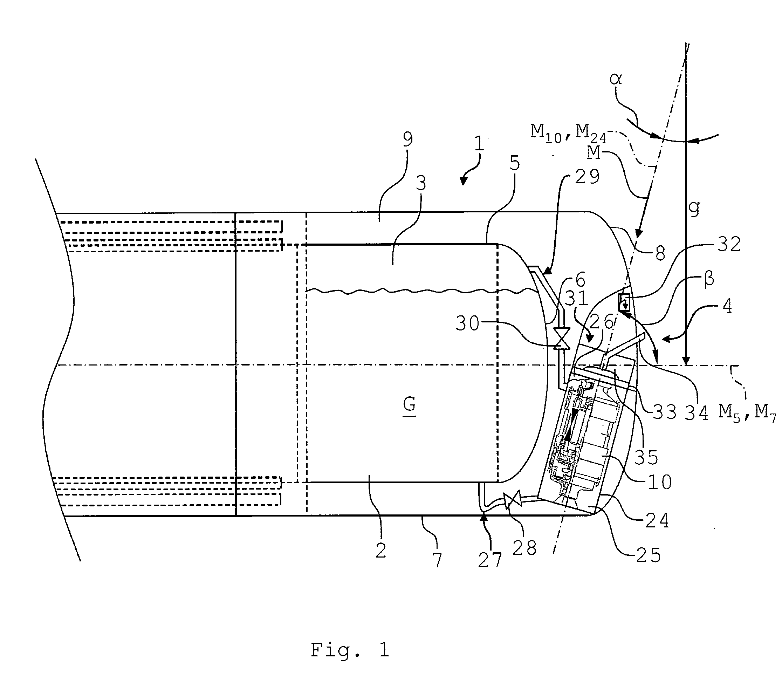

Die Fig. 1 zeigt eine schematische Teilschnittansicht einer Ausführungsform eines Behälters 1 für ein tiefkaltes Flüssiggas G. Der Begriff "Gas" wird im Folgenden ohne Ansehen des Aggregatzustands verwendet und ist somit als Dachbegriff für das Flüssiggas G im gasförmigen und im flüssigen Aggregatszustand, im Folgenden als Flüssiggas G und als gasförmiges Gas bezeichnet, zu sehen. Dementsprechend hat der mit Gas gefüllte Behälter 1 eine Flüssigkeitszone 2 und darüber eine Gaszone 3. Das Flüssiggas G kann beispielsweise Flüssiggas (Liquefied Natural Gas oder LNG) sein. Als LNG wird durch Abkühlung auf -164 bis -161° C verflüssigtes Erdgas bezeichnet. Das Flüssiggas G kann beispielsweise auch flüssiger Wasserstoff oder eine andere kryogene Flüssigkeit wie z.B. flüssiger Stickstoff, Sauerstoff, flüssiges Argon, Kohlendioxid oder Helium sein.

Dem Behälter 1 ist eine Entnahmevorrichtung 4 zum Entnehmen des Flüssiggases G aus dem Behälter 1 zugeordnet. Die Entnahmevorrichtung 4 kann eine Zapfvorrichtung zum Betanken eines Fahrzeugs sein. Der Behälter 1 umfasst einen Innenbehälter 5 zum Aufnehmen des tiefkalten Flüssiggases G. Der Innenbehälter 5 kann beispielsweise aus einem Metallwerkstoff gefertigt sein. Der Innenbehälter 5 ist vorzugsweise zylinderförmig und rotationssymmetrisch um eine Symmetrie- oder Mittelachse M₅ ausgebildet. Stirnseitig ist der zylinderförmige Innenbehälter 5 jeweils beidseits von einem gewölbten Deckel 6, von denen in der Fig. 1 nur einer gezeigt ist, verschlossen.

Der Innenbehälter 5 ist vollständig innerhalb eines Außenbehälters 7 angeordnet. Der Außenbehälter 7 kann ebenfalls aus einem Metallwerkstoff gebildet sein. Der Außenbehälter 7 ist vorzugsweise zylinderförmig und rotationssymmetrisch zu einer Symmetrie- oder Mittelachse M₇ ausgebildet. Die Mittelachse M₅ und die Mittelachse M₇ können kollinear angeordnet sein. Das heißt, die Mittelachse M₅ des Innenbehälters 5 kann identisch mit der Mittelachse M₇ des Außenbehälters 7 sein. Der zylinderförmige Außenbehälter 7 ist stirnseitig jeweils mit einem gewölbten Deckel 8 verschlossen, von denen in der Fig. 1 jedoch nur einer gezeigt ist.

Zwischen dem Innenbehälter 5 und dem Außenbehälter 7 ist ein Isolierraum 9 zum thermischen Isolieren des Innenbehälters 5 vorgesehen. Der Isolierraum 9 kann evakuiert und/oder mit einem Isoliermaterial gefüllt sein. Beispielsweise kann der Isolierraum 9 mit Perlit gefüllt sein. Perlit ist ein chemisch und physikalisch umgewandeltes vulkanisches Glas und zählt zu den Gesteinen. Der Perlit kann beispielsweise in Granulatform in den Isolierraum 9 eingefüllt sein.

Der Behälter 1 umfasst weiterhin eine Förderpumpe 10 zum Fördern des tiefkalten Flüssiggases G. Die Förderpumpe 10 ist Teil der Entnahmevorrichtung 4. Die Förderpumpe 10 ist vollständig innerhalb des Isolierraums 9 angeordnet. Die Förderpumpe 10 ist vorzugsweise eine Kreiselpumpe. Die Förderpumpe 10 weist eine zylinderförmige Geometrie auf und ist rotationssymmetrisch zu einer Symmetrie- oder Mittelachse M₁₀ aufgebaut. Die Mittelachse M₁₀ der Förderpumpe 10 ist schräg zu einer Schwerkraftrichtung g angeordnet. Die Schrägkraftrichtung g ist in der Orientierung der Fig. 1 vertikal positioniert. Insbesondere kann die Mittelachse M₁₀ in einem vorbestimmten Winkel α schräg zu der Schwerkraftrichtung g geneigt sein. Der vorbestimmte Winkel α kann bevorzugt 10 bis 40°, weiter bevorzugt 15 bis 35°, weiter bevorzugt 20 bis 30°, weiter bevorzugt 25°, betragen.

Die Mittelachse M₁₀ der Förderpumpe 10 ist auch schräg zu der Mittelachse M₇ beziehungsweise schräg zu der Mittelachse M₅ geneigt. Ein Winkel β zwischen der Mittelachse M₁₀ der Förderpumpe und der Mittelachse M₇ des Außenbehälters beziehungsweise der Mittelachse M₅ des Innenbehälters 5 kann bevorzugt 50 bis 80°, bevorzugt 55 bis 75°, weiter bevorzugt 60 bis 70°, weiter bevorzugt 65°, betragen.

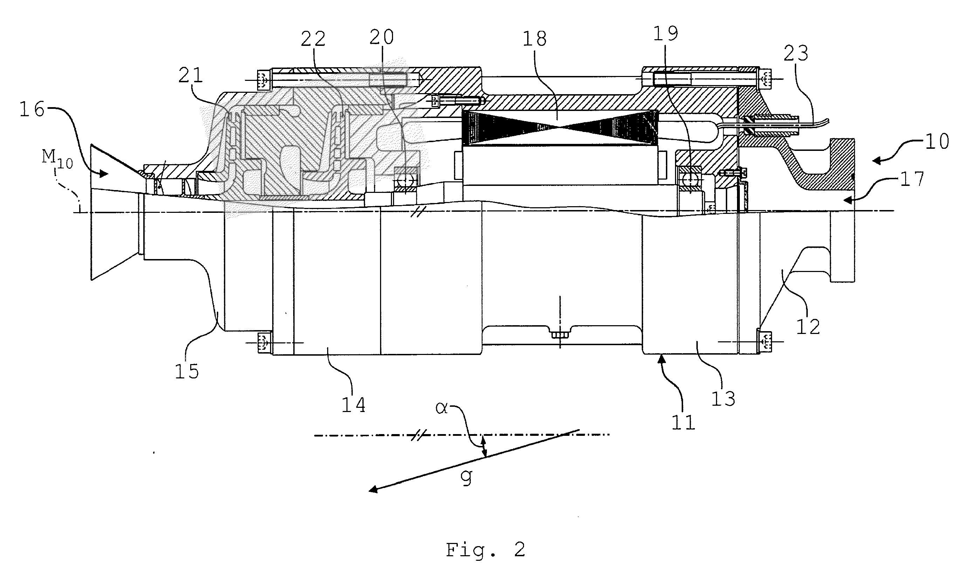

Die Fig. 2 zeigt eine schematische Teilschnittansicht einer Ausführungsform der Förderpumpe 10. Die Förderpumpe 10 umfasst ein Gehäuse 11 mit einem oberen Deckel 12, einem Motoraufnahmeabschnitt 13, einem Pumpengehäuse 14 und einem unteren Deckel 15. An dem unteren Deckel 15 ist ein Einlass 16, durch den das tiefkalte Flüssiggas G angesaugt wird, vorgesehen. An dem oberen Deckel 12 ist ein Auslass 17 vorgesehen, durch den das tiefkalte Flüssiggas G abgeführt wird. In dem Motoraufnahmeabschnitt 13 ist ein Antriebsmotor 18, insbesondere ein Elektromotor, vorgesehen. Der Antriebsmotor 18 ist im Betrieb der Förderpumpe 10 mit dem tiefkalten Flüssiggas G geflutet und wird somit durch dieses gekühlt. Wälzlager 19, 20 des Antriebsmotors 18 sind ebenfalls mit dem tiefkalten Flüssiggas G geflutet und geschmiert.

Der Antriebsmotor 18 treibt zwei Flügelräder oder Schaufelräder 21, 22 zum Fördern des tiefkalten Flüssiggases G an. Über einen elektrischen Anschluss 23 wird der Antriebsmotor 18 bestromt. In dem in den Behälter 1 eingebauten Zustand der Förderpumpe 10 ist der obere Deckel 12 in der Orientierung der Fig. 1 oben und der untere Deckel 15 ist in der Orientierung der Fig. 1 unten angeordnet.

Die Förderpumpe 10 ist in einem Pumpengehäuse 24 aufgenommen, das vollständig in dem Isolierraum 9 angeordnet ist. Das Pumpengehäuse 24 kann zylinderförmig und rotationssymmetrisch zu einer Symmetrie- oder Mittelachse M₂₄ aufgebaut sein. Die Mittelachse M₂₄ ist kollinear zu der Mittelachse M₁₀ angeordnet. Das Pumpengehäuse 24 ist nicht in Fluidverbindung mit dem Isolierraum 9. Das heißt, zwischen dem Pumpengehäuse 24 und dem Isolierraum 9 besteht keine fluidische Verbindung. Das Pumpengehäuse 24 kann drucklos, das heißt, nicht evakuiert sein. Im Betrieb der Förderpumpe 10 ist das Pumpengehäuse 24 mit dem tiefkalten Flüssiggas G geflutet.

In dem Pumpengehäuse 24 sind eine Flüssigkeitszone 25 und eine Gaszone 26 vorgesehen. Die Gaszone 26 ist dabei so klein, dass die Förderpumpe 10 vorzugsweise vollständig oder zumindest bis über das Wälzlager 19 hinaus in der Flüssigkeitszone 25 angeordnet ist. Das Pumpengehäuse 24 ist über eine Flüssiggaszuführleitung 27 in Fluidverbindung mit dem Innenbehälter 5. Die Flüssiggaszuführleitung 27 ist dazu eingerichtet, das tiefkalte Flüssiggas G aus dem Innenbehälter 5 der Förderpumpe 10 zuzuführen. Dabei ist die Flüssiggaszuführleitung 27 an einem tiefsten Punkt des Innenbehälters 5 angeordnet, um eine vollständige Entleerung des Innenbehälters 5 zu ermöglichen. Die Flüssiggaszuführleitung 27 kann ein Absperrventil 28 zum Absperren derselben aufweisen.

Das Pumpengehäuse 24 ist weiterhin über eine Entlüftungsleitung 29 in Fluidverbindung mit dem Innenbehälter 5. Die Entlüftungsleitung 29 verbindet die Gaszone 26 des Pumpengehäuses 24 mit der Gaszone 3 des Innenbehälters 5. Über die Entlüftungsleitung 29 wird sogenanntes Boil-Off-Gas, das heißt, gasförmiges Gas, wieder dem Innenbehälter 5 zugeführt. Die Entlüftungsleitung 29 kann ebenfalls ein Absperrventil 30 zum Schließen der Entlüftungsleitung 29 aufweisen.

In dem Außenbehälter 7 ist eine Montageöffnung 31 zum Einbau der Förderpumpe 10 in das Pumpengehäuse 24 vorgesehen. An der Montageöffnung 31 kann ein Elektroanschluss 32 zum Anschließen der Förderpumpe 10 vorgesehen sein. Eine Montagerichtung M der Förderpumpe 10 durch die Montageöffnung 31 hindurch ist schräg zu der Schwerkraftrichtung g angeordnet. Die Montagerichtung M kann dabei mit der Mittelachse M₂₄ des Pumpengehäuses 24 übereinstimmen.

Die Montageöffnung 31 ist mit einem Pumpenflansch 33 oder einem geeigneten Verschlussdeckel verschlossen, an dem eine Flüssiggasabzapfleitung 34 vorgesehen ist, die aus dem Außenbehälter 7 herausgeführt ist. Die Montageöffnung 31 kann weiterhin mit einem Isolierelement 35 verschlossen sein. Das Isolierelement 35 kann beispielsweise ein Styroporblock sein. Das Isolierelement 35 kann an dem Pumpenflansch 33 befestigt sein oder auf diesen aufgelegt sein.

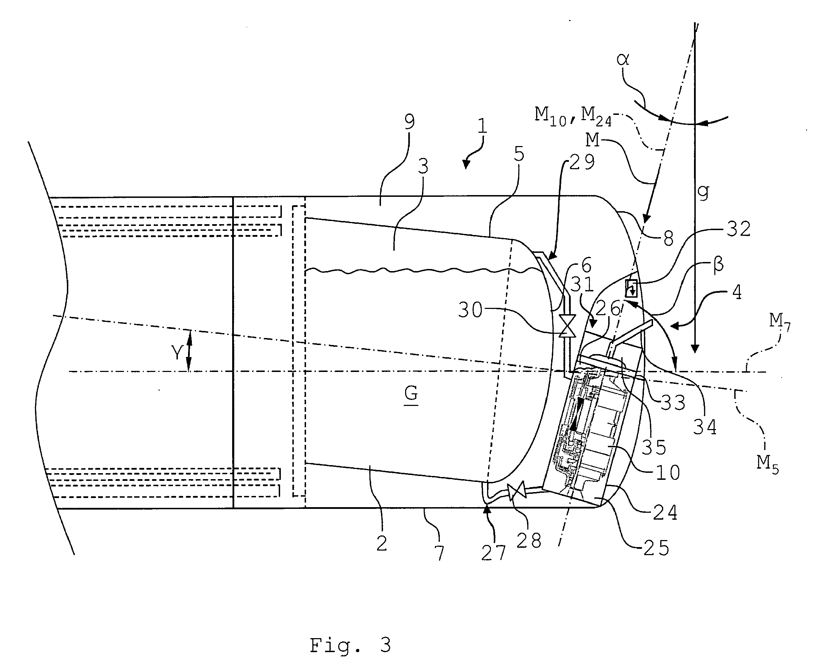

Die Fig. 3 zeigt eine weitere Ausführungsform eines Behälters 1 mit einer Entnahmevorrichtung 4. Der Behälter 1 gemäß der Fig. 3 unterscheidet sich von dem Behälter 1 gemäß der Fig. 1 nur dadurch, dass der Innenbehälter 5 schräg in Richtung der Förderpumpe 10 geneigt ist. Hierdurch ist eine vollständige Entleerung des Innenbehälters 5 möglich. Insbesondere kann die Mittelachse M₅ des Innenbehälters 5 zu der Mittelachse M₇ des Außenbehälters 7 geneigt sein. Beispielsweise kann die Mittelachse M₅ in einem Winkel γ zu der Mittelachse M₇ geneigt sein. Der Winkel γ kann bevorzugt 10 bis 20°, weiter bevorzugt 12 bis 18°, weiter bevorzugt 15°, betragen.

Durch die geneigte Einbauart der Förderpumpe 10 kann im Vergleich zu einem vertikalen Einbau der Förderpumpe 10 erreicht werden, dass der Außenbehälter 7 kleiner und damit kompakter aufgebaut werden kann, da die Förderpumpe 10 bei der Montage seitlich schräg an dem Deckel 6 des Innenbehälters 5 vorbeigeführt werden kann. Durch die kompakte Bauweise ohne aufwändige Verrohrung kann auch eine bessere Pumpen-Performance erreicht werden. Durch die Schrägstellung des Innenbehälters 5 ist ferner gewährleistet, dass dieser vollständig entleerbar ist.

Dadurch, dass die Förderpumpe 10 innerhalb des Isolierraums 9 angeordnet ist, ergibt sich ein reduzierter Verrohrungsaufwand. Weiterhin ist eine aufwändige Isolation der Flüssiggaszuführleitung 27 und der Entlüftungsleitung 29 nicht erforderlich. Die Flüssiggaszuführleitung 27 und die Entlüftungsleitung 29 müssen insbesondere nicht als vakuumisolierte Rohrleitungen ausgeführt sein. Ein Erwärmen der Förderpumpe 10 und der Flüssiggaszuführleitung 27 findet bei einem Stillstand der Förderpumpe 10 aufgrund der Anordnung der Förderpumpe 10 in dem Isolierraum 9 nicht oder nur verzögert statt. Hierdurch ist es bei einem Betankungsvorgang nicht erforderlich, die Förderpumpe 10 zuerst kaltzufahren, um ein Betanken zu ermöglichen.

Obwohl die vorliegende Erfindung vollständig anhand von Ausführungsbeispielen beschrieben wurde, ist sie vielfältig modifizierbar.

### Verwendete Bezugszeichen

- 1: Behälter
- 2: Flüssigkeitszone
- 3: Gaszone
- 4: Entnahmevorrichtung
- 5: Innenbehälter
- 6: Deckel
- 7: Außenbehälter
- 8: Deckel
- 9: Isolierraum
- 10: Förderpumpe
- 11: Gehäuse
- 12: Deckel
- 13: Motoraufnahmeabschnitt
- 14: Pumpengehäuse
- 15: Deckel
- 16: Einlass
- 17: Auslass
- 18: Antriebsmotor
- 19: Wälzlager
- 20: Wälzlager
- 21: Schaufelrad
- 22: Schaufelrad
- 23: Anschluss
- 24: Pumpengehäuse
- 25: Flüssigkeitszone
- 26: Gaszone
- 27: Flüssiggaszuführleitung
- 28: Absperrventil
- 29: Entlüftungsleitung
- 30: Absperrventil
- 31: Montageöffnung
- 32: Elektroanschluss
- 33: Pumpenflansch
- 34: Flüssiggasabzapfleitung
- 35: Isolierelement

- g: Schwerkraftrichtung
- G: Flüssiggas
- M: Montagerichtung
- M₅: Mittelachse
- M₇: Mittelachse
- M₁₀: Mittelachse
- M₂₄: Mittelachse
- α: Winkel
- β: Winkel
- γ: Winkel

## Patentansprüche

1. Behälter (1) für ein tiefkaltes Flüssiggas (G), mit einem Innenbehälter (5) zum Aufnehmen des tiefkalten Flüssiggases (G), einem Außenbehälter (7), innerhalb dem der Innenbehälter (5) aufgenommen ist, einem zwischen dem Innenbehälter (5) und dem Außenbehälter (7) vorgesehenen Isolierraum (9) zum thermischen Isolieren des Innenbehälters (5) und einer Förderpumpe (10) zum Fördern des tiefkalten Flüssiggases (G), wobei die Förderpumpe (10) in dem Isolierraum (9) angeordnet ist und wobei eine Mittelachse (M₁₀) der Förderpumpe (10) schräg zu einer Schwerkraftrichtung (g) angeordnet ist.

2. Behälter nach Anspruch 1, wobei der Innenbehälter (5) schräg in Richtung der Förderpumpe (10) geneigt ist.

3. Behälter nach Anspruch 1 oder 2, wobei der Innenbehälter (5) und der Außenbehälter (7) jeweils zylinderförmig um eine Mittelachse (M₅, M₇) aufgebaut sind und wobei die Mittelachse (M₁₀) der Förderpumpe (10) schräg zu der Mittelachse (M₇) des Außenbehälters (7) angeordnet ist.

4. Behälter nach Anspruch 3, wobei die Mittelachse (M₅) des Innenbehälters (5) schräg zu der Mittelachse (M₇) des Außenbehälters (7) angeordnet ist.

5. Behälter nach einem der Ansprüche 1 - 4, wobei die Förderpumpe (10) in einem Pumpengehäuse (24) aufgenommen ist, das in dem Isolierraum (9) angeordnet ist.

6. Behälter nach Anspruch 5, wobei das Pumpengehäuse (24) nicht in Fluidverbindung mit dem Isolierraum (9) ist.

7. Behälter nach Anspruch 5 oder 6, wobei das Pumpengehäuse (24) im Betrieb der Förderpumpe (10) mit dem tiefkalten Flüssiggas (G) geflutet ist.

8. Behälter nach einem der Ansprüche 5 - 7, wobei das Pumpengehäuse (24) über eine Flüssiggaszuführleitung (27) in Fluidverbindung mit dem Innenbehälter (5) ist.

9. Behälter nach einem der Ansprüche 5 - 8, wobei das Pumpengehäuse (24) über eine Entlüftungsleitung (29) in Fluidverbindung mit dem Innenbehälter (5) ist.

10. Behälter nach Anspruch 8 oder 9, wobei die Flüssiggaszuführleitung (27) und/oder die Entlüftungsleitung (29) jeweils ein Absperrventil (28, 30) aufweisen.

11. Behälter nach einem der Ansprüche 5 - 10, wobei in dem Außenbehälter (7) eine Montageöffnung (31) zum Einbau der Förderpumpe (10) in das Pumpengehäuse (24) vorgesehen ist.

12. Behälter nach Anspruch 11, wobei eine Montagerichtung (M) der Förderpumpe (10) durch die Montageöffnung (31) hindurch schräg zu der Schwerkraftrichtung (g) orientiert ist.

13. Behälter nach Anspruch 11 oder 12, wobei die Montageöffnung (31) mit einem Isolierelement (35) verschlossen ist.

14. Behälter nach einem der Ansprüche 1 - 13, wobei die Förderpumpe (10) eine Flüssiggasabzapfleitung (34) aufweist, die aus dem Außenbehälter (7) herausgeführt ist.

15. Behälter nach einem der Ansprüche 1 - 14, wobei der Isolierraum (9) evakuiert und/oder mit einem Isoliermaterial gefüllt ist.
